(19) **Europäisches Patentamt**

**European Patent Office**

**Office européen des brevets**

(11) Publication number: **0 235 874**
**B1**

(12) # EUROPEAN PATENT SPECIFICATION

(45) Date of publication of the patent specification:
**19.09.90**

(51) Int. Cl.⁵: **F02M 69/00,** G05D 16/06

(21) Application number: **87300055.8**

(22) Date of filing: **06.01.87**

(54) Multi-adaptive fuel pressure regulator.

(30) Priority: **18.02.86 US 830281**
**28.07.86 US 891353**

(43) Date of publication of application:
**09.09.87 Bulletin 87/37**

(45) Publication of the grant of the patent:
**19.09.90 Bulletin 90/38**

(84) Designated Contracting States:
**DE ES FR GB IT**

(56) References cited:
**EP-A- 0 102 717**
**EP-A- 0 116 742**
**EP-A- 0 166 528**
**GB-A- 2 031 064**
**GB-A- 2 107 784**

(73) Proprietor: **GENERAL MOTORS CORPORATION,**
**General Motors Building 3044 West Grand Boulevard,**
**Detroit Michigan 48202(US)**

(72) Inventor: **Field, Martin John, 843 Palmer Road,**
**Churchville New York 14428(US)**
Inventor: **Makusij, Andrew John, 23 Squirrel's Heath**
**Road, Fairport New York 14450(US)**
Inventor: **Penwright, James Larry, 8503 Chestnut Ridge,**
**Gasport New York 14067(US)**

(74) Representative: **Denton, Michael John et al, Patent**
**Section Vauxhall Motors Limited 1st Floor Gideon**
**House 26 Chapel Street, Luton Bedfordshire**
**LU1 2SE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to a base for a fuel pressure regulator.

Fuel injection apparatus for automotive engines generally includes a fuel pressure regulator to maintain the fuel at a pressure appropriate for delivery to the engine. For each apparatus the design of the fuel pressure regulator must be suitable for its particular application, and often a new fuel pressure regulator design must be developed for a new fuel injection apparatus application. Known fuel injection apparatus is disclosed in EP-A-0166528 and EP-A-0102717.

This invention provides a fuel pressure regulator adapted for a multiplicity of fuel injection apparatus applications.

In accordance with the present invention, a base for a fuel pressure regulator is characterised over the above mentioned prior art by the features specified in the characterising portion of Claim 1.

In the present invention, a single base can be used for several different applications as the outlet can be chosen to be positioned in any one of six different directions relative to the inlet. This provides considerable savings in design costs and storage.

In one embodiment of a fuel pressure regulator according to one aspect of this invention, the base of the fuel pressure regulator is formed from a symetrical extrusion having three sides provided with projections that define five planar regions. The five planar regions defined by the projections, together with a sixth planar region defined by an end of the base, are each adapted to accept a cutting tool for forming an outlet from the fuel pressure regulator, whereby the fuel pressure regulator may be equipped with an outlet oriented in any of six directions.

In another embodiment of a fuel pressure regulator according to one aspect of this invention, the base is formed from an asymetric extrusion having sides that define three planar regions. The three planar regions, together with a planar region defined by an end of the base, are each adapted to accept a cutting tool for forming an outlet from the fuel pressure regulator. By locating the inlet at either of the two ends of the base, the fuel pressure regulator may be equipped with an outlet oriented in any of six directions.

The present invention is now described, by way of example, with reference to the following description and the accompanying drawings, in which:

Figure I is a sectional view of one embodiment of a fuel pressure regulator according to this invention, showing the fuel pressure regulator plugged directly onto a snout projecting from a fuel body;

Figure 2 is an end view of an extrusion from which the base of the fuel pressure regulator of Figure I was formed;

Figure 3 is an end view of the fuel pressure regulator of Figure I, showing the fuel outlet oriented in one of the six possible directions;

Figure 4 is an end view of a fuel pressure regulator also formed from the extrusion of Figure 2, showing the fuel outlet oriented in a second direction;

Figure 5 is a sectional view of the fuel pressure regulator of Figure 4, taken along line 5-5 of Figure 4, also showing the fuel pressure regulator plugged directly onto a snout projecting from a fuel body;

Figure 6 is an end view of a fuel pressure regulator also formed from the extrusion of Figure 2, showing the fuel outlet oriented in a third direction;

Figure 7 is an end view of a fuel pressure regulator also formed from the extrusion of Figure 2, showing the fuel outlet oriented in a fourth direction;

Figure 8 is an end view of a fuel pressure regulator also formed from the extrusion of Figure 2, showing the fuel outlet oriented in a fifth direction;

Figure 9 is an end view of a fuel pressure regulator also formed from the extrusion of Figure 2, showing the fuel outlet oriented in a sixth direction;

Figure I0 is a side view of a fuel pressure regulator also formed from the extrusion of Figure 2, with parts broken away to show a separate inlet fitting;

Figure II is an end view of an extrusion from which another embodiment of a fuel pressure regulator is formed according to this invention;

Figure I2 is an end view of a fuel pressure regulator formed from the extrusion of Figure II, showing the fuel outlet oriented in one of the six possible directions;

Figure I3 is an end view of a fuel pressure regulator also formed from the extrusion of Figure II, showing the fuel outlet oriented in a second direction;

Figure I4 is an end view of another fuel pressure regulator also formed from the extrusion of Figure II, showing the fuel outlet oriented in the second direction but offset on the opposite side of the centre line from the fuel pressure regulator of Figure I3;

Figure I5 is an end view of a fuel pressure regulator also formed from the extrusion of Figure II, showing the fuel outlet oriented in a third direction;

Figure I6 is an end view of a fuel pressure regulator also formed from the extrusion of Figure II, showing the fuel outlet oriented in a fourth direction;

Figure I7 is an end view of a fuel pressure regulator also formed from the extrusion of Figure II, showing the fuel outlet oriented in a fifth direction; and

Figure I8 is an end view of a fuel pressure regulator also formed from the extrusion of Figure II, showing the fuel outlet oriented in a sixth direction.

Referring first to Figures I-3, a fuel pressure regulator I0 has a base I2 having six sides formed from the aluminium extrusion I4 shown in Figure 2. As viewed in Figure 2, aluminium extrusion I4 has a top surface I6, a bottom surface I8 and lateral surfaces 20 and 22 formed during extrusion. Those four surfaces, together with the cut-off ends 24 and 26 of aluminium extrusion I4, define the six sides of base I2.

The cut-off end 24 of alumimium extrusion I4 forms a first planar region which is viewed in elevation in Figure 2.

The bottom surface I8 of aluminium extrusion I4 has a pair of depending legs 28 and 30. Between depending legs 28 and 30, bottom surface 18 forms a second planar region facing downwardly as viewed in Figure 2. Bottom surface 18 has a projection 32 that is trapezoidal in cross-section.

The lateral surfaces 20 and 22 of aluminium extrusion 14 have enlargements 34 and 36. Below enlargements 34 and 36, lateral surface 20 forms a third planar region facing rightwardly as viewed in Figure 2, and lateral surface 22 forms a fourth planar region facing leftwardly as viewed in Figure 2. Lateral surface 20 has a projection 38 and lateral surface 22 has a projection 40, projections 38 and 40 being triangular in cross-section.

Projections 32 and 38 form a fifth planar region facing downwardly and to the right as viewed in Figure 2, and projections 32 and 40 form a sixth planar region facing downwardly and to the left as viewed in Figure 2.

From the upper surface 16, aluminium extrusion 14 is machined to form a regulated fuel pressure chamber 42 and a small excess fuel chamber 44. Regulated fuel pressure chamber 42 has a well 46 that receives fuel from an inlet 48 machined through the cut-off end 26 of aluminium extrusion 14. A valve seat 50 is inserted between regulated fuel pressure chamber 42 and excess fuel chamber 44. A diaphragm 52 closes regulated fuel pressure chamber 42 and carries a valve member 53. Diaphragm 52 positions valve member 53 to control fuel flow from regulated fuel pressure chamber 42 through valve seat 50 to excess fuel chamber 44, balancing the fuel pressure in regulated fuel pressure chamber 42 on diaphragm 52 with the force of a spring 54 and with the pressure in a bias chamber 55 above diaphragm 52. Fuel pressure regulator 10 thereby maintains the desired fuel pressure in regulated fuel pressure chamber 42 and discharges excess fuel to excess fuel chamber 44. Diaphragm 52 is supported and retained as set forth in our published European Patent Application No 0,166,528.

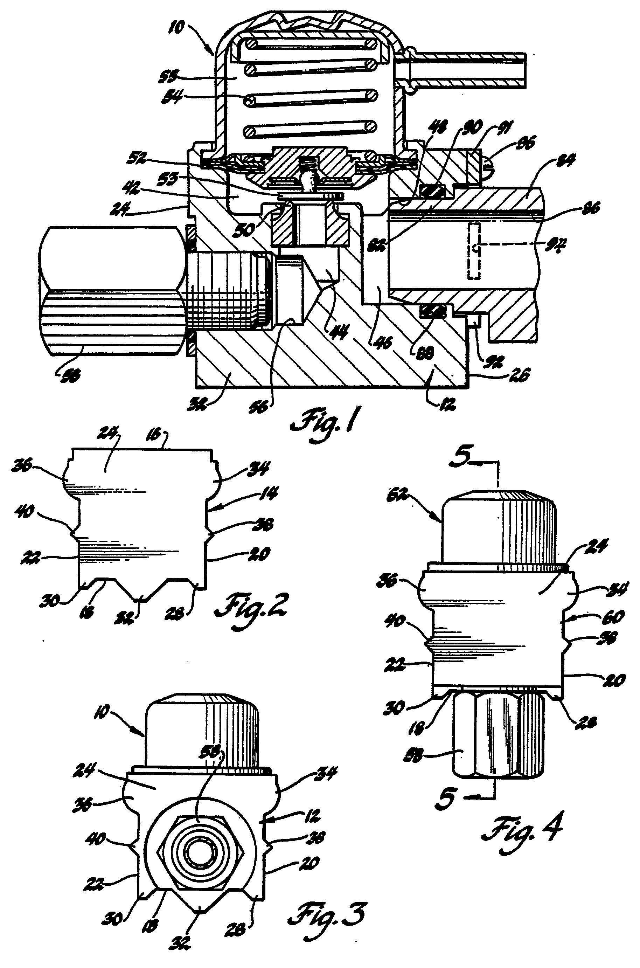

In the embodiment of Figures 1 and 3, the (first) planar region formed by cut-off end 24 accepts a cutting tool that machines an outlet 56 opening from excess fuel chamber 44 to discharge excess fuel therefrom. A fuel discharge fitting 58 threaded into outlet 56 accordingly is oriented parallel to inlet 48.

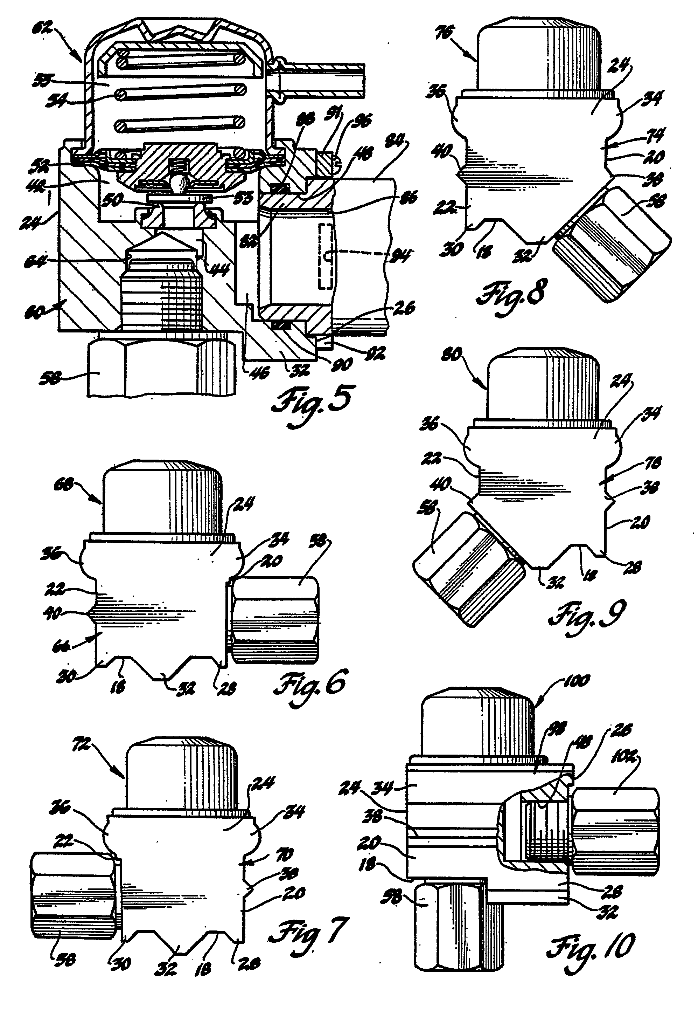

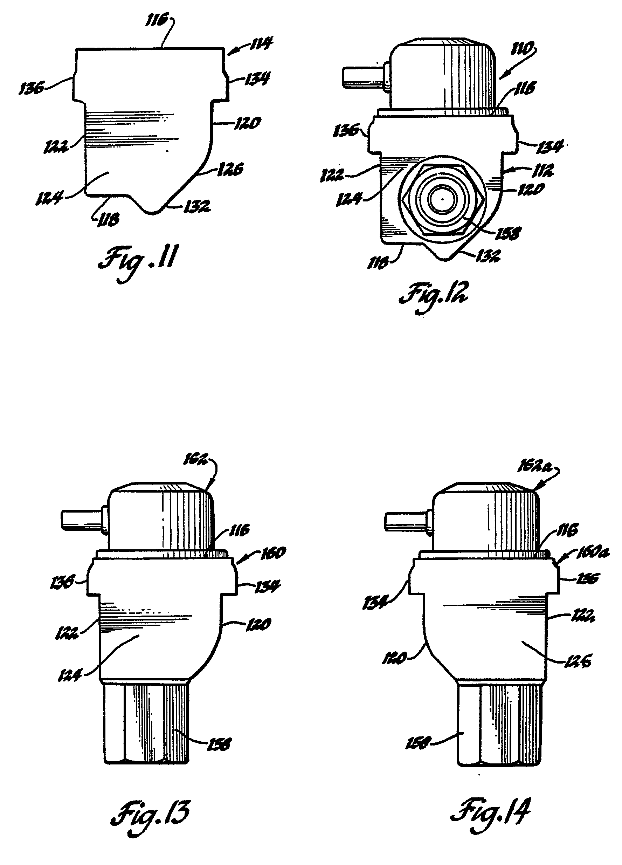

The base 60 of a fuel pressure regulator 62 shown in Figures 4 and 5 is similar to the base 12 of fuel pressure regulator 10. In the embodiment of Figures 4 and 5, however, the (second) planar region formed by bottom surface 18 accepts a cutting tool that machines an outlet 64 opening from excess fuel chamber 44, removing a portion of projection 32 in the process. When threaded into outlet 64, fuel discharge fitting 58 accordingly is oriented perpendicular to inlet 48 and directed downwardly as viewed in Figures 4 and 5. Fuel pressure regulator 62 is otherwise similar to fuel pressure regulator 10.

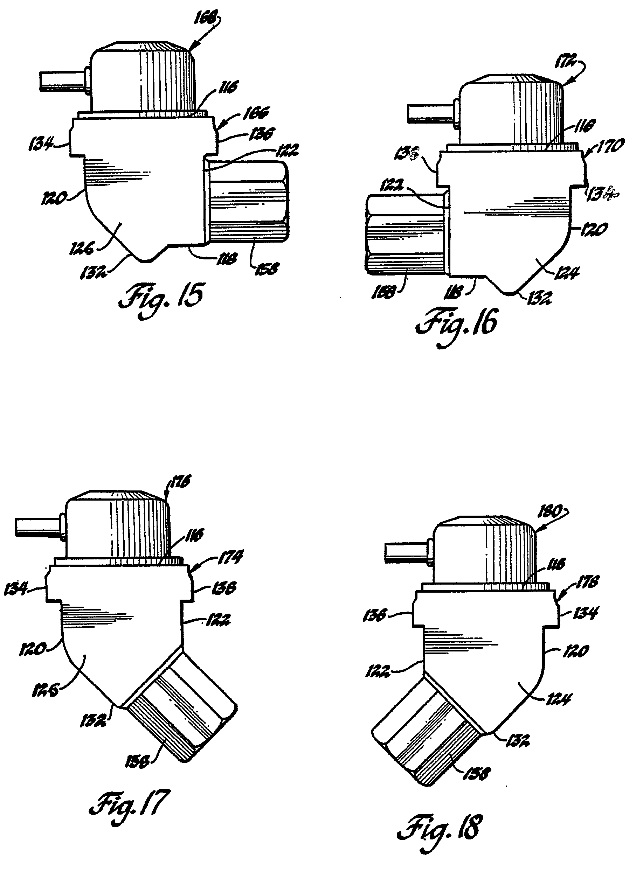

In the base 66 of a fuel pressure regulator 68 shown in Figure 6, the (third) planar region formed by lateral surface 20 accepts a cutting tool that machines an outlet opening from the excess fuel chamber, removing a portion of projection 38 in the process. Accordingly, when fuel discharge fitting 58 is threaded into the outlet, it is oriented perpendicular to the inlet and is directed rightwardly as viewed in Figure 6. Fuel pressure regulator 68 is otherwise similar to fuel pressure regulators 10 and 62.

In the base 70 of a fuel pressure regulator 72 shown in Figure 7, the (fourth) planar region formed by lateral surface 22 accepts a cutting tool that machines an outlet opening from the excess fuel chamber, removing a portion of projection 40 in the process. Accordingly, when fuel discharge fitting 58 is threaded into the outlet, it is oriented perpendicular to the inlet and is directed leftwardly as viewed in Figure 7. Fuel pressure regulator 72 is otherwise similar to fuel pressure regulators 10, 62 and 68.

In the base 74 of a fuel pressure regulator 76 shown in Figure 8, the (fifth) planar region defined by projections 32 and 38 accepts a cutting tool that machines an outlet opening from the excess fuel chamber, removing a portion of depending leg 28 in the process. Accordingly, when fuel discharge fitting 58 is threaded into the outlet, it is oriented perpendicular to the inlet and is directed downwardly and rightwardly as viewed in Figure 8. Fuel pressure regulator 76 is otherwise similar to fuel pressure regulators 10, 62, 68 and 72.

In the base 78 of a fuel pressure regulator 80 shown in Figure 9, the (sixth) planar region defined by projections 32 and 40 accepts a cutting tool that machines an outlet opening from the excess fuel chamber, removing a portion of depending leg 30 in the process. Accordingly, when fuel discharge fitting 58 is threaded into the outlet, it is oriented perpendicular to the inlet and is directed downwardly and leftwardly as viewed in Figure 9. Fuel pressure regulator 80 is otherwise similar to fuel pressure regulators 10, 62, 68, 72 and 76.

As shown in Figures 1 and 5, the inlet 48 of each fuel pressure regulator is plugged directly onto a snout 82 formed on a fuel body 84. A fuel passage 86 extends from fuel body 84 through snout 82 to supply fuel to the regulated fuel pressure chamber 42, and the fuel pressure regulator 10,62 maintains the desired fuel pressure in fuel passage 86.

Inlet 48 has an enlarged portion 88 containing an O-ring 90 that seals the connection between the base 12,60 and fuel body 84. A bracket 91 has legs 92 that straddle fuel body 84 and are secured in grooves 94 formed on the outside of fuel body 84. Screws 96 are received in enlargements 34 and 36 of aluminium extrusion 14 to secure bracket 91 to the fuel pressure regulator 10,62. The fuel pressure regulator 10,62 accordingly forms a secure and compact assembly with fuel body 84.

The base 98 of a fuel pressure regulator 100 shown in Figure 10 has a fuel inlet fitting 102 threaded into inlet 48 to allow use of fuel pressure regulator 100 in an application where it cannot be plugged directly onto a fuel body. Fuel pressure regulator is otherwise similar to fuel pressure regulators 10, 62, 68, 72, 76 and 80.

Referring next to Figures 11-12, a fuel pressure regulator 110 has a base 112 having six sides formed from the aluminium extrusion 114 shown in Figure 11. As viewed in Figure 11, aluminium extrusion 114 has a top surface 116, a bottom surface 118 and lateral surfaces 120 and 122 formed during extrusion. Those four surfaces, together with cut-off ends l24 and l26 of aluminium extrusion ll4, define the six sides of base ll2.

The cut-off end l24 of aluminium extrusion ll4 forms a first planar region which is viewed in elevation in Figure ll. The opposite cut-off end l26 is hidden in Figure ll.

The bottom surface ll8 of aluminium extrusion ll4 forms a second planar region facing downwardly as viewed in Figure ll. Bottom surface ll8 has a projection l32 that is trapezoidal in cross-section.

The lateral surfaces l20 and l22 of aluminium extrusion ll4 have enlargements l34 and l36. Below enlargements l34 and l36, lateral surface l20 forms a curved region facing rightwardly and downwardly as viewed in Figure ll, and lateral surface l22 forms a third planar region facing leftwardly as viewed in Figure ll.

Projection l32 forms a fourth planar region facing downwardly and to the left as viewed in Figure ll.

Aluminium extrusion ll4 is machined in the same manner as aluminium extrusion l4 to form the base ll2 of fuel pressure regulator ll0, and fuel pressure regulator ll0 is otherwise constructed and assembled in a manner similar to fuel pressure regulator l0.

In the embodiment of Figure l2, the inlet for fuel is machined in the hidden cut-off end l26 of aluminium extrusion ll4, and the (first) planar region formed by cut-off end l24 accepts a cutting tool that machines an outlet opening from the excess fuel chamber. Accordingly, when a fuel discharge fitting l58 is threaded into the outlet, it is oriented parallel to the inlet.

The base l60 of a fuel pressure regulator l62 shown in Figure l3 is similar to the base ll2 of fuel pressure regulator ll0. In the embodiment of Figure l3, however, the (second) planar region formed by bottom surface ll8 accepts a cutting tool that machines an outlet opening from the excess fuel chamber, removing projection l32 in the process. When threaded into the outlet, fuel discharge fitting l58 accordingly is oriented perpendicular to the inlet on the cut-off end l26 of aluminium extrusion ll4, and is directed downwardly as viewed in Figure l3. Fuel pressure regulator l62 is otherwise similar to fuel pressure regulator ll0.

The base l60a of a fuel pressure regulator l62a shown in Figure l4 is similar to the base l60 of fuel pressure regulator l62. In the embodiment of Figure l4, however, the inlet is machined in the cut-off end l24 of aluminium extrusion ll4, hidden from view in Figure l4. The (second) planar region formed by bottom surface ll8 accepts a cutting tool that machines an outlet opening from the excess fuel chamber, removing projection l32 in the process. When threaded into the outlet, fuel discharge fitting l58 is oriented perpendicular to the inlet and directed downwardly as viewed in Figure l4. Comparison of Figure l3 and l4 will show that fuel discharge fitting l58 is offset to the left of centre in Figure l3 and to the right of centre in Figure l4. Fuel pressure regulator l62a is otherwise similar to fuel pressure regulator ll0 and l62.

In the base l66 of a fuel pressure regulator l68 shown in Figure l5, the inlet is machined in the cut-

off end l24 (which is hidden) of aluminium extrusion ll4, and the (third) planar region formed by lateral surface l22 accepts a cutting tool that machines an outlet opening from the excess fuel chamber. Accordingly, when fuel discharge fitting l58 is threaded into the outlet, it is oriented perpendicular to the inlet and is directed rightwardly as viewed in Figure l5. Fuel pressure regulator l68 is otherwise similar to fuel pressure regulators ll0, l62 and l62a.

In the base l70 of a fuel pressure regulator l72 shown in Figure l6, the inlet is machined in the hidden cut-off end l26 of aluminium extrusion ll4, and the (third) planar region formed by lateral surface l22 accepts a cutting tool that machines an outlet opening from the excess fuel chamber. Accordingly, when fuel discharge fitting l58 is threaded into the outlet, it is oriented perpendicular to the inlet and is directed leftwardly as viewed in Figure l6. Fuel pressure regulator l72 is otherwise similar to fuel pressure regulators ll0, l62, l62a and l68.

In the base l74 of a fuel pressure regulator l76 shown in Figure l7, the inlet is machined in the hidden cut-off end l24 of aluminium extrusion ll4, and the (fourth) planar region defined by projection l32 accepts a cutting tool that machines an outlet opening from the excess fuel chamber. Accordingly, when fuel discharge fitting l58 is threaded into the outlet, it is oriented perpendicular to the inlet and is directed downwardly and rightwardly as viewed in Figure l7. Fuel pressure regulator l76 is otherwise similar to fuel pressure regulators ll0, l62, l62a, l68 and l72.

In the base l78 of a fuel pressure regulator l80 shown in Figure l8, the inlet is machined in the hidden cut-off end l26 of aluminium extrusion ll4, and the (fourth) planar region defined by projection l32 accepts a cutting tool that machines an outlet opening from the excess fuel chamber. Accordingly, when fuel discharge fitting l58 is threaded into the outlet, it is oriented perpendicular to the inlet and is directed downwardly and leftwardly as viewed in Figure l8. Fuel pressure regulator l80 is otherwise similar to fuel pressure regulators ll0, l62, l62a, l68, l72 and l76.

**Claims**

1. A prefabricated base (12) of a fuel pressure regulator (10) in the state prior to forming an outlet opening (56, 64) which communicates with a fuel exit chamber (44), said base being formed from an extrusion (14) and comprising extruded sides (16-22) and two planar cutoff ends (24, 26), one of the extruded sides being plane and the side opposite to said extruded plane side comprising a part which is parallel to said extruded plane side and an extruded longitudinal projection (32, 132), the extruded plane side comprising a large bore forming a part of a fuel pressure regulating chamber (42) and having a smaller bore in its ground which forms the fuel exit chamber (44), the extruded plane side (16) being adapted to support a diaphragm (52), the base further comprising a bore forming an inlet opening (48) through one of the planar cut-off ends (26) and communicating with said large bore, characterised in that, the extruded longitudinal projection (32, 132) is trapezoidal and diminishing to its outer end in cross-section, the imaginary middle line of said trapezoidal cross-section which extends through its outer end crossing the extruded plane side (16) approximately in the centre line of said extruded plane side, each of the extruded sides adjacent to the extruded plane side (16) comprising an extruded longitudinal enlargement (34, 36, 134, 136) which also forms part of the extruded plane side.

2. A prefabricated base as claimed in claim 1, characterised in that a side of the extruded trapezoidal projection (132) extends to one of the extruded sides (120) adjacent the extruded plane side (116) to define a curved region therewith, and in that the outer end of the trapezoidal projection is rounded.

3. A prefabricated base as claimed in claim 1, characterised in that each of the extruded sides (20, 22) adjacent the extruded plane side (16) is formed with an extruded longitudinal projection (38, 40) which is triangular in cross-section.

4. A process of manufacturing a base (74, 78, 174, 178) of a fuel pressure regulator (76, 80, 176, 180) with a prefabricated base as claimed in any one of claims 1 to 3, characterised by machining a plane which is defined in part by a side of the extruded trapezoidal projection (32, 132), and by machining the outlet opening (64) in said plane.

5. A process as claimed in claim 4 with the prefabricated base of claim 3, characterised by aligning a side of one of the triangular projections with said side of the extruded trapezoidal projection (32) to define the plane for the outlet opening (56, 64).

6. A process of manufacturing a base (12, 112) of a fuel pressure regulator (10, 110) with a prefabricated base as claimed in any one of claims 1 to 3, characterised by machining the outlet opening (56, 64) through a plane defined by the other of the planar cut-off ends (24, 124).

7. A process of manufacturing a base (60, 98, 160, 160a) of a fuel pressure regulator (62, 100, 162, 162a) with a prefabricated base as claimed in any one of claims 1 to 3, characterised by removing a part of the trapezoidal projection (32) to form a plane which is defined in part by the side (18, 118) opposite the extruded plane side (16, 116) and parallel to said plane side, and by machining the outlet opening (56, 64) through said plane.

8. A process of manufacturing a base (166, 170) of a fuel pressure regulator (168, 172) with a prefabricated base as claimed in claim 2, characterised by machining the outlet opening (56, 64) through the plane defined by the extruded side (122) adjacent the extruded plane side (16, 116) and opposite the extruded side with the curved region.

9. A process of manufacturing a base (66) of a fuel pressure regulator (68) with a prefabricated base as claimed in claim 3, characterised by removing a portion of one of the projections which are triangular in cross section to form a plane defined in part by the corresponding extruded side adjacent the extruded plane side, and by machining the outlet opening through said plane.

**Patentansprüche**

1. Vorgefertigtes Grundteil (12) für einen Treibstoff-Druckregler (10) im Zustand vor der Ausbildung einer Auslaßöffnung (56, 64), die mit einer Treibstoff-Austrittskammer (44) in Verbindung steht, wobei das Grundteil aus einem Extrudierteil (14) gebildet ist und extrudierte Seitenwände (16 bis 22) und zwei planar abgeschnittene Endwände (24, 26) umfaßt, die eine extrudierte Seitenwand eben ist und die der extrudierten ebenen Seitenwand gegenüberliegende Seitenwand einen zur extrudierten ebenen Seitenwand parallelen Teil umfaßt und einen extrudierten Längsfortsatz (32, 132), die extrudierte ebene Seitenwand eine große Bohrung enthält, welche einen Teil einer Treibstoffdruck-Regulierkammer (42) bildet und eine kleinere Bohrung in ihrem Unterteil besitzt, welche die Treibstoff-Austrittskammer (44) bildet, die extrudierte ebene Seitenwand (16) ausgelegt ist, eine Membran (52) abzustützen, das Grundteil weiter eine Bohrung durch eine der eben abgeschnittenen Endwände (26) umfaßt, welche eine Einlaßöffnung (48) bildet und mit der größeren Bohrung in Verbindung steht, dadurch gekennzeichnet, daß der extrudierte Längsfortsatz (32, 132) trapezförmig ist und zu seinem äußeren Ende hin im Querschnitt abnimmt, wobei die imaginäre Mittellinie des trapezförmigen Querschnitts, die sich durch sein äußeres Ende erstreckt, die extrudierte ebene Seitenwand (16) annähernd in der Mittellinie der extrudierten ebenen Seitenwand kreuzt und jede extrudierte Seitenwand benachbart zur extrudierten ebenen Seite (16) eine extrudierte Längsvergrößerung (34, 36, 134, 136) umfaßt, die ebenfalls einen Teil der extrudierten ebenen Seitenwand bildet.

2. Vorgefertigtes Grundteil nach Anspruch 1, dadurch gekennzeichnet, daß eine Seite des extrudierten trapezförmigen Fortsatzes (132) sich zu einer der extrudierten Seitenwände (120) benachbart der extrudierten ebenen Seitenwand (116) erstreckt, um einen gekrümmten Bereich damit zu bilden, und daß das äußere Ende des trapezförmigen Fortsatzes abgerundet ist.

3. Vorgefertigtes Grundteil nach Anspruch 1, dadurch gekennzeichnet, daß jede extrudierte Seitenwand (20, 22) benachbart zur extrudierten ebenen Seitenwand (16) mit einem extrudierten Längsfortsatz (34) mit dreieckigem Querschnitt gebildet ist.

4. Verfahren zum Herstellen eines Grundteils (74, 78, 174, 178) eines Treibstoff-Druckreglers (76, 80, 176, 180) mit einem vorgefertigten Grundteil nach einem der Ansprüche 1 bis 3, dadurch gekennzeichnet, daß eine ebene Fläche bearbeitet wird, die teilweise durch eine Seitenwand des extrudierten trapezförmigen Fortsatzes (32, 132) bestimmt ist, und daß die Auslaßöffnung (64) in dieser Ebene bearbeitet wird.

5. Verfahren nach Anspruch 4 mit dem vorgefertigten Grundteil nach Anspruch 3, dadurch gekennzeichnet, daß eine Seitenwand eines der dreieckigen Fortsätze mit der Seitenwand des extrudierten trapezförmigen Fortsatzes (32) ausgerichtet wird, um die Ebene für die Auslaßöffnung (54, 64) zu bestimmen.

6. Verfahren zum Herstellen eines Grundteils (12, 112) eines Treibstoff-Druckreglers (10, 110) mit einem vorgefertigten Grundteil nach einem der Ansprüche 1 bis 3, dadurch gekennzeichnet, daß die Auslaßöffnung (56, 64) durch eine Ebene bearbeitet wird, welche durch die andere der planar abgeschnittenen Endwände (24, 124) definiert ist.

7. Verfahren zum Herstellen eines Grundteils (60, 98, 160, 160a) eines Treibstoff-Druckreglers (62, 100, 162, 162a) mit einem vorgefertigten Grundteil nach einem der Ansprüche 1 bis 3, dadurch gekennzeichnet, daß ein Teil des trapezförmigen Fortsatzes (32) zur Bildung einer Ebene entfernt wird, die teilweise durch die Seitenwand (18, 118) gegenüber der extrudierten ebenen Seitenwand (16, 116) und parallel zu der ebenen Seitenwand bestimmt ist, und daß die Auslaßöffnung (56) durch die Ebene bearbeitet wird.

8. Verfahren zum Herstellen eines Grundteils (166, 170) eines Treibstoff-Druckreglers (168, 172) mit einem vorgefertigten Grundteil nach Anspruch 2, dadurch gekennzeichnet, daß die Auslaßöffnung (56, 64) durch die Ebene bearbeitet wird, welche durch die extrudierte Seitenwand (122) benachbart der extrudierten ebenen Seitenwand (16, 116) und gegenüber der extrudierten Seitenwand mit dem gekrümmten Bereich bestimmt wird.

9. Verfahren zur Herstellung eines Grundteils (66) eines Treibstoff-Druckreglers (68) mit einem vorgefertigten Grundteil nach Anspruch 3, dadurch gekennzeichnet, daß ein Abschnitt eines der Fortsätze mit dreieckigem Querschnitt entfernt wird, um eine Ebene zu bilden, welche teilweise durch die entsprechende extrudierte Seitenwand benachbart zur extrudierten ebenen Seitenwand bestimmt ist, und daß die Auslaßöffnung durch die Ebene bearbeitet wird.

**Revendications**

1. Base préfabriquée (12) d'un régulateur de pression de carburant (10), dans l'état qui précède la formation d'une ouverture de sortie (56, 64) qui communique avec une chambre de sortie de carburant (44), ladite base étant formée à partir d'un extrudé (14) et comprenant des faces extrudées (16-22) et deux extrémités coupées planes (24, 26), l'une des faces extrudées étant plane et la face qui est à l'opposé de ladite face plane extrudée comprenant une partie qui est parallèle à ladite face plane extrudée et une saillie longitudinale extrudée (32, 132), la face plane extrudée présentant un large perçage qui forme une partie d'une chambre de régulation de pression de carburant (42) et un perçage plus petit formé dans son fond et qui forme la chambre de sortie du carburant (44), la face plane extrudée (16) étant adaptée pour supporter une membrane (52), la base comprenant en outre un perçage formant une ouverture d'entrée (48) qui traverse l'une des extrémités coupées planes (26) et qui communique avec ledit grand perçage, caractérisée en ce que la saillie longitudinale extrudée (32, 132) est trapézoïdale et diminue jusqu'à son extrémité extérieure en section transversale, la ligne médiane imaginaire de ladite section trapézoïdale qui passe par son extrémité extérieure coupant la face plane extrudée (16) approximativement sur la médiane de ladite face extrudée, chacune des faces extrudées adjacentes à la face plane extrudée (16) comprenant un élargissement longitudinal extrudé (34, 36, 134, 136) qui forme aussi une partie de la face plane extrudée.

2. Base préfabriquée selon la revendication 1, caractérisée en ce qu'une face de la saillie trapézoïdale extrudée (132) s'étend jusqu'à l'une des faces extrudées (120) adjacentes à la face plane extrudée (116) pour définir avec elles une région incurvée et en ce que l'extrémité extérieure de la saillie trapézoïdale est arrondie.

3. Base préfabriquée selon la revendication 1, caractérisée en ce que chacune des faces extrudées (20, 22) adjacentes à la face plane extrudée (16) est munie d'une saillie longitudinale extrudée (38, 40) qui est triangulaire en section transversale.

4. Procédé de fabrication d'une base (74, 78, 174, 178) d'un régulateur de pression de carburant (76, 80, 176, 180) utilisant une base préfabriquée selon une quelconque des revendications 1 à 3, caractérisé en ce qu'on usine un plan qui est défini au moins en partie par une face de la saillie trapézoïdale extrudée (32, 312) et on usine l'ouverture de sortie (64) dans ledit plan.

5. Procédé selon la revendication 4 utilisant la base préfabriquée de la revendication 3, caractérisé en ce qu'on aligne une face de l'une des saillies triangulaires avec ladite face de la saillie trapézoïdale extrudée (32) pour définir le plan utilisé pour l'ouverture de sortie (56, 64).

6. Procédé de fabrication d'une base (12, 112) d'un régulateur de pression de carburant (10, 110) utilisant une base préfabriquée selon une quelconque des revendications 1 à 3, caractérisé en ce qu'on usine l'ouverture de sortie (56, 64) à travers un plan défini par l'autre des extrémités coupées planes (24, 124).

7. Procédé de fabrication d'une base (60, 98, 160, 160a) d'un régulateur de pression de carburant (62, 100, 162, 162a) utilisant une base préfabriquée selon une quelconque des revendications 1 à 3, caractérisé en ce qu'on enlève une partie de la saillie trapézoïdale (32) pour former un plan qui est défini en partie par la face (18, 118), qui est à l'opposé de la face plane extrudée (16, 116) et parallèle à ladite surface plane, et on usine l'ouverture de sortie (56, 64) à travers ledit plan.

8. Procédé de fabrication d'une base (166, 170) d'un régulateur de pression de carburant (168, 172) utilisant une base préfabriquée selon la revendication 2, caractérisé en ce qu'on usine l'ouverture de sortie (56, 64) à travers le plan défini par la face extrudée (122) qui est adjacente à la face plane extrudée (16, 116) et à l'opposé de la face extrudée qui possède une région incurvée.

9. Procédé de fabrication de la base (66) d'un régulateur de pression de carburant (68) utilisant une base préfabriquée selon la revendication 3, caractérisé en ce qu'on enlève une partie d'une des saillies qui sont triangulaires en section transversale pour former un plan défini en partie par la face extrudée correspondante adjacente à la face plane extrudée, et on usine l'ouverture de sortie à travers ledit plan.

Fig. 1

Fig. 2

Fig. 3

Fig. 4

Fig.5

Fig.6

Fig.7

Fig.8

Fig.9

Fig.10

EP 0 235 874 B1

Fig. 11

Fig. 12

Fig. 13

Fig. 14

Fig. 15

Fig. 16

Fig. 17

Fig. 18